# EUROPEAN PATENT APPLICATION

(11) **EP 1 336 828 A1**
(43) Date of publication of application: **20.08.2003**
(21) Application number: 03075433.7
(22) Date of filing: 14.02.2003
(51) Int. Cl.: G01K 3/06

(54) **Measuring system for determining the average temperature and optionally heat content of, for instance, hot water boilers**

(30) Priority: 14.02.2002 NL 1019964
(71) Applicant: N.V. Nederlandsche Apparatenfabriek NEDAP, 7141 DC Groenlo (NL)
(72) Inventor: Leerkotte, Bernardus Johannes Maria, 7572 BW Oldenzaal (NL)
(74) Representative: Prins, Adrianus Willem

(57) **Abstract**

A measuring system for determining an average temperature of an amount of fluid in, for instance, a boiler, wherein the measuring system is provided with a temperature sensor in the form of a conductor which can be contacted at least partly with a fluid, and a measuring device which is electrically connected to the conductor for determining the resistance of at least a part of the conductor whose average temperature is to be determined, wherein the conductor comprises a relatively low electrical resistance and the measuring device is provided with a supply source for applying a supply voltage across the conductor.

## Description

The invention relates to a measuring system for determining an average temperature of an amount of fluid in, for instance, a boiler, wherein the measuring system is provided with a temperature sensor in the form of a conductor which can be contacted at least partly with the fluid, and a measuring device which is electrically connected with the conductor for determining the resistance of at least a part of the conductor of which the average temperature is to be determined.

Such a measuring system is known per se and is mostly suitable for determining the temperature and heat content of, for instance, a hot water boiler. Generally, the resistance of the entire conductor is then determined.

Most present-day systems for determining the heat content of an electric or gas-fired boiler utilize relatively costly integral sensors built-up from, for instance, a glass fiber of the required length around which a thin, enameled copper wire has been wound, or an integral sensor consisting of a carrier material on which several thermistors are interconnected with the aid of wiring.

Manufacturing such sensors is relatively expensive. Further, the known sensors are often provided with several internal solderings, welds or clamped joints which adversely affect the lifespan of the respective sensors.

The invention contemplates meeting at least one of the drawbacks mentioned. Accordingly, the measuring system according to the invention is characterized in that the conductor comprises a relatively low electrical resistance and that the measuring system is provided with a supply source for applying a supply voltage across the conductor. This provides the advantage that, for instance, a simply but well-conducting metal wire can be used. Such a conductor is inexpensive and accordingly reduces the cost price of a measuring system provided with such a conductor. Moreover, such a conductor does not need to be provided with several internal solderings, welds or clamped joints and can therefore be of simple and low cost design, which is beneficial to a low cost price of the measuring system according to the invention. In particular, it holds that the resistance of the conductor, in increasing order of preference, is at most equal to 500 mOhm, 300 mOhm, 250 mOhm, 200 mOhm or 100 mOhm (1/10 Ohm), respectively. Another advantage is that a supply source with a relatively low maximum output can be adequate for determining the resistance of the sensor part. As a result of this, the supply can be of inexpensive design and the use of the measuring system entails very low costs.

Preferably, the conductor is of wire-shaped design. This offers the advantage that it is simple to adjust the length to the dimensions and the shape of a tank in which the fluid can be stored. Further, a wire can simply adopt any desired configuration.

The conductor can comprise, for instance, a cord or a cable, which offers the advantage that such conductors are commercially available on a large scale.

The conductor can comprise a substantially copper core, which offers the advantage that such a conductor has a very low electrical resistance and that the temperature dependency of the resistor is well known.

Further, it holds that the conductor can be attached with, for instance, adhesive tape, to an inside of a tank in an electrically insulating manner. This permits a simple, rapid and inexpensive use of the measuring system.

Preferably, the sensor part comprises a relatively large part of the conductor. Consequently, a change of the resistance of the conductor is mainly determined by the change of the resistance of the sensor part, which is beneficial to the accuracy of the measuring system.

The invention further relates to a tank provided with such a measuring system. The invention also relates to a boiler provided with such a tank. In addition, the invention relates to an electronic system with which the average temperature of a boiler tank can be measured.

The invention is presently elucidated with reference to a drawing. In the drawing:
Fig. 1 shows a first part of an embodiment of a measuring system according to the invention comprising a conductor 2 designed as cable sensor, having connections SW 1 and SW2 and, connected to this conductor 2, connections VS1 and VS2 for voltage measuring wires;
Fig. 2 shows a second part of an embodiment of a measuring system according to the invention comprising a measuring device for controlling the conductor, measuring a current through the conductor and measuring a voltage across the part of the conductor to be measured.

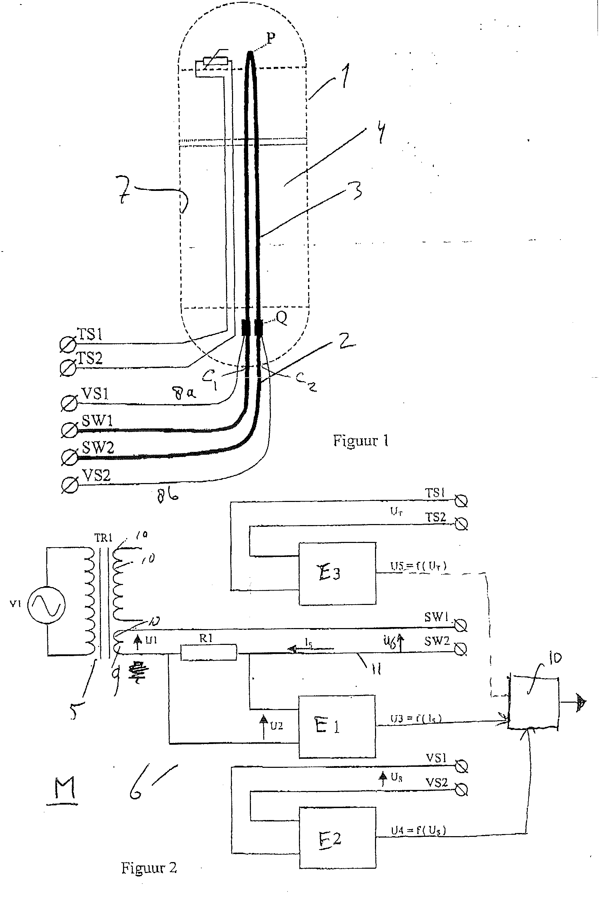

Fig. 1 shows a boiler tank 1 and a conductor 2 extending partly into the boiler tank 1. The part 3 of the conductor 2 extending in the boiler tank 1 is the sensor part 3 of a measuring system M according to the invention, which is suitable for determining an average temperature of an amount of fluid 4 which, in this example, is present in the boiler tank 1. In this manner, the sensor part 3 can be contacted with the fluid 4, which will generally comprise water. The measuring system M further comprises a measuring device 6 (Fig. 2) for determining the electrical resistance of mainly the sensor part 3 of the conductor 2 so that, on the basis of a predetermined relation between the average temperature of the sensor part 3 and the resistance of the sensor part 3, the average temperature of the sensor part 3 can be determined and hence the average temperature of a fluid 4 which is in contact with mainly the sensor part 3. The conductor 2 has a relatively low electrical resistance. In the example shown, the conductor 2 is of wire-shape design and comprises a relatively low ohmic cord or cable. Preferably, the conductor comprises a substantially copper core.

The conductor 2, at least the sensor part 3 thereof, can be connectable to an inner side 7 of the tank 1 in an electrically insulating manner with, for instance, adhesive tape (not shown). The sensor part 3 comprises a relatively large part of the conductor 2. In this example, the conductor is of loop-shaped design. The conductor has been folded over at a point P located in the sensor part 3. In Fig. 1, the conductor, designed as a cord, is provided with terminals SW1 and SW2 located outside the tank 1, which are connected, in use, to the measuring system 6 (see Fig. 2) for the purpose of applying a voltage across the conductor 2. At point Q, which, in this example, is located as close as possible to a point where the separation is between the part of the conductor 2 located outside the tank 1 and the part located within the tank 1 (substantially the sensor part 3), two voltage measuring wires 8a, 8b are provided. In this example, also, the point P lies as high as possible in the boiler, so that the conductor 2 extends through a large part of the tank. The voltage measuring wires 8a, 8b comprise terminal clamps VS1 and VS2, respectively, located outside the tank 1, which, in use, are also connected to the measuring device. Here, it holds that the measuring device is directly electrically connected to those points of the conductor between which the part of the conductor is located whose average temperature is to be determined (the sensor part). This has been realized here in that the measuring device, by means of voltage measuring wires, is electrically connected to those points of the conductor, between which that part of the conductor is located whose average temperature is to be determined (the sensor part).

The diameter of the preferably copper core of the conductor 2, designed as a cord in this example, is preferably selected such that, with the cord having the necessary length, the total ohmic resistance between the terminals SW1 and SW1, at room temperature is approximately 100 to 200 mOhm (10-¹Ω).

The measuring device 6 is designed to allow a voltage to be supplied to the terminals S_{W1} and S_{W2}. In this example, this is an AC voltage, however, it can also be a direct voltage. Preferably, this voltage is relatively low.

Further, the measuring device 6 is designed, when it is connected to the terminal clamps V_{S1} and V_{S2}, to determine a voltage Us across the sensor part 3 for the conductor 2. Also, the measuring device 6 is designed for determining the current Is running through the conductor 2. In this example, the measuring device 6 is further designed for determining, from the ratio between U_{S} and Is, the resistance R_{PQ} of the sensor part 3. The resistance R_{PQ} is a measure for the average temperature of the sensor part 3 and hence for the fluid which is in contact with the sensor part 3.

The fact that according to the invention, indeed, in a significant manner, the average temperature can be determined, appears from a calculated example.

In particular, the measuring device is provided with a supply source 5, comprising a transformer TR₁. At a secondary side before the transformer TR₁ one to several windings 9 (in this example, several) are used for generating a voltage U₁. The windings or coil 9 are connected via a resistance R to the terminal clamps S_{W1} en S_{W2} for supplying the earlier-mentioned relatively low voltage to the conductor 2. In effect, the coil 9 constitutes the output of the supply source 5, which is connected to a series connection of the (measuring) resistor R₁ and the conductor 2.

In this embodiment, use is made of the extra coil 9 on the transformer (TR₁) (Fig. 2) with only one to several windings 10. This coil 9 can also be designed as a part of a coil for generating higher voltages, while two branches are provided between which the required low voltage is available. In this example, the resistor R₁ is included in the connection 11 between the terminal SW2 and the coil 9 to determine the current through the conductor 2 through determination of the voltage drop U2 across R1. In this example, the resistance R1 has a value in the order of 100 mOhm (10⁻¹Ω). Block E1 comprises electronics known per se required for amplifying or otherwise converting the measured voltage U2 into a signal suitable for further processing. The output signal U3 is a function of the current Iₛ. In other words, the quantity U2 and the quantity U3 corresponds to the current Iₛ.

Block E2 comprises electronics known per se, required for amplifying or otherwise converting the measured voltage U₃ into a signal suitable for further processing. The output signal U4 is a function of the sensor voltage U₃ to be measured between the clamps VS1 and VS2.

The voltage U1 of the transformer TR1 is selected such that the power P to be supplied to the reference resistor R1 and the cable sensor does not contribute more than, for instance 200 to 300 mW. This means that, at room temperature, U1 = (P x R)^{0.5} = 0.2 [W] x 0.2 [Ω])^{0.5} = 0.2[V] wherein R = R1 + R_{sw1-sw2.} Here, R refers to the total resistance of the conductor 2 and the resistor R_{1.} R_{sw1-sw2} refers to the resistance of the conductor (between the terminals SW1 en SW2). The current Iₛ= U1 / R = 0.2 [V] / 0.2 [Ω] is then approximately 1[A].

Under normal circumstances, the length of the conductor 2 from the clamps SW1 and SW2 to point Q will be less than the length from point P to point Q. This means, that at least half of the resistance of the conductor 2 is influenced by the temperature of the water in the boiler.

In this example, we suppose that this is more than a half and what applies in that case is that at room temperature (20°C), across the sensor part, the voltage Uₛ = Iₛ x 50 mΩ = 50 mV, assuming that the resistance of the sensor part 3 is 50 mΩ.

When it is presumed that the water in the boiler tank 3 can be heated in its entirety to 85°C, then, as a result of a temperature increase ΔT of 65°C, the resistance of 50 mΩ will increase to 50. (1+α . ΔT) = 50 [mΩ]. (1+4.10⁻³ [/K] . 65[K]) = 50 [mΩ] . 1.26 = 63 [mΩ], wherein α is the temperature coefficient of copper. For the sake of simplicity, it may be assumed that the resistance of the conductor 2 in the path SW1/SW2 to point Q has not changed and that the impedance of the transformer is relatively low. In that case, it can be calculated that the voltage Uₛ of 1 [A] . 50 [mΩ] = 50 [mV] increases to 59.1 mV. For Uₛ = U1. (R_{P-Q} / R_{P-Q} + R_{Q-SW1_SW2} + R1)) = 200[mV] . (63 / (63 + 50 + 100)) =59.1 mV. In that case, the current Iₛ in the conductor designed as a measuring loop, drops from 1 [A] to Iₛ = U1 / (R_{P-Q} + R_{Q-SW1_SW2} + R1) = 200 [mV] / (63 + 50 + 100) [mΩ] = 0.9389 [A]. Here, R_{Q-SW1_SW2} = R_{QSW1} + R_{QSW2}, where R_{QSW1} is the resistance of the part of the conductor 2 extending between Q and S_{W1}, and R_{QSW2} is the resistance of the part of the conductor extending between Q en S_{W2}. Further, R_{PQ} is the resistance of the conductor extending from P to Q to P. In other words R_{PQ} = R_{T}-R_{QSW1}-R_{QSW2} wherein R_{T} is the total resistance of the conductor 2.

Surprisingly, the calculating example indicates that, despite the low-ohmic circuit and the low power dissipation of 200 mW, there is sufficient signal for accurately determining, after amplification, the resistance of the sensor part 3. This indeed renders it possible to use a simple cable or cord as a conductor. The diameter of the copper core of the conductor is then preferably selected in order that, at room temperature, the ohmic resistance between the terminals S_{W1} and S_{W2} is 25-500 mOhm, more preferably 50-300 mOhm, in particular 75-250 mOhm and more in particular 100-200 mOhm.

This resistance determination is realized by performing a division of the measured voltage Uₛ by the measured current Iₛ, which has been derived from U2. (Ohm's law).To that end, the measuring device 6 comprises a microprocessor 10 to which the voltages U3 and U4 are supplied. U3 is a quantity related to the current Is and U4 is a quantity related to the voltage U_{S}. Next, with the microprocessor 10, in a simple manner, on the basis of a predetermined and often linear relation between the average temperature of the sensor part 3 and the resistance of the sensor part 3, the average temperature of the sensor part 3, and hence of the fluid in contact therewith, can be determined.

In this example, it holds that the measuring device is designed for operatively determining the voltage across that part of the conductor (the sensor part) whose average temperature is to be determined. Further, it holds in this example that the measuring device is directly electrically connected with those points of the conductor between which that part of the conductor is located whose average temperature is to be determined (the sensor part). Also, it holds that the microprocessor is designed for determining the resistance of at least that part of the conductor, the sensor part, whose average temperature is to be determined. In this example, it further holds that the microprocessor determines the resistance on the basis of the quantity (U3) and the quantity (U4), i.e. on the basis of I_{S} and the voltage across that part of the conductor (the sensor part) whose resistance is to be determined. It holds, then, that the microprocessor is designed for determining the average temperature of the sensor part on the basis of the resistance. It is also possible that the microprocessor determines the average temperature of the sensor part directly on the basis of the quantities U3 and U4 without first determining the resistance of the sensor part.

As with measuring systems according to the current state of the art, this system, too, preferably comprises a temperature sensor with the terminal clamps TS1 and TS2 with which the prevailing temperature in the top of the boiler can be determined. Block E3 contains the electronics for measuring the temperature in the upper part of the boiler. The output signal U5 is a function of this temperature. Since, as in some of the systems according to the current technology, there is a linear relation between the measured resistance and the average temperature, the measuring system is simple to calibrate. This can for instance be done in the measuring device 6 with the microprocessor 10 by measuring the temperature of the tank during production, and determining a correction factor and storing this in a non-volatile memory of the microprocessor, which is connected to the block E3 to that end.

Therefore, the heat content of the fluid can be determined in a simple manner as it directly related with the average temperature measured. Optionally, the tank is provided with a float which indicates the level of the fluid and hence, optionally, the volume of the fluid present. This information can also be used for more accurate determination of the temperature and heat content of the fluid in the tank.

As the conductor 2 can have the relatively low resistance mentioned, many relatively inexpensive cables known per se can be used.

Possible examples of the ohmic resistance at room temperature of the conductor between S_{W1} and S_{W2} have already been given. The ohmic resistance of the sensor part 3 of the conductor has an ohmic value which is preferably at least 40%, more preferably at least 50%, in particular at least 60% and more in particular at least 70% of the ohmic resistance of the conductor 2. The sensor part can also consist of the entire conductor 2. The power that is supplied to the measuring resistor R and the conductor 2 is preferably at most 600 mW, more preferably at most 500 mW, in particular at most 400 mW and more in particular at most 300 mW. It can also be stated that the power that is supplied to the conductor is preferably at most 600 mW, more preferably at most 500 mW, in particular at most 400 mW and more in particular at most 300 mW. The supply source 5 in use preferably generates a low voltage in the order of 100 to a few hundreds of millivolts. As a supply source, also other supply sources known per se can be utilized. In this example, the coil 9 is an extra coil provided next to the main coil 10 which comprises many more windings for generating high voltages. Also, a low high voltage could be drawn from the coil 10 by making terminals across a limited number of the windings of the coil 10. Also, the supply source C may be provided with an AC/DC converter.

Further, it is possible that the conductor extends exclusively within the tank, between the points C₁ and C₂. In that example, the points C₁ and C₂ are connectors. The cable parts between C₁ and S_{W1} and C₂ and S_{W2} are then low-ohmic cables, preferably each with a resistance lower than the resistance of the conductor 2. Preferably, the resistance of these cable parts together is less than 50% of the resistance of the conductor 2, more preferably less than 60%, 70%, 80% or 90%, respectively.

The invention is not limited in any way to the exemplary embodiment shown and discussed. For instance, the conductor can be designed and included in the tank in all sorts of manners. Here, a spiral-shaped conductor provided along the inside wall of the tank can be considered. It is also possible that the conductor "enters" and "leaves" the tank at two mutually separate positions.

## Claims

1. A measuring system for determining an average temperature of an amount of fluid in, for instance, a boiler, wherein the measuring system is provided with a temperature sensor in the form of a conductor which can be contacted at least partly with the fluid, and a measuring device which is electrically connected with the conductor for determining the resistance of at least a part of the conductor whose average temperature is to be determined, **characterized in that** the conductor comprises a relatively low electrical resistance and that the measuring device is provided with a supply source for applying a supply voltage across the conductor.

2. A measuring system according to claim 1, **characterized in that** the conductor consists of a low-ohmic cord or cable known per se.

3. A measuring system according to claim 1 or 2, **characterized in that** the resistance of the conductor is in the range of 25-500 mOhm, 50-300 mOhm, 75-250 mOhm or 100-200 mOhm.

4. A measuring system according to claim 1 or 2, **characterized in that** the resistance of the conductor, (in ascending preference) is at most equal to 500 mOhm, 300 mOhm, 250 mOhm, 200 mOhm or 100 mOhm, respectively.

5. A measuring system according to any one of the preceding claims, **characterized in that** the total power at most supplied by the supply source, in ascending preference, is equal to 600 mW, 500 mW, 400 mW, 300mW, 200mW, 100mW or 50 mW, respectively.

6. A measuring system according to any one of the preceding claims 1-4, **characterized in that** the power supplied at most by the supply source to the conductor, in ascending preference, is equal to 600 mW, 500 mW, 400 mW, 300 mW, 200 mW, 100 mW or 50 mW, respectively.

7. A measuring system according to any one of the preceding claims, **characterized in that** the conductor is of wire-shaped design.

8. A measuring system according to any one of the preceding claims, **characterized in that** the conductor comprises a cord or wire.

9. A measuring system according to any one of the preceding claims, **characterized in that** the conductor comprises a substantially copper core.

10. A measuring system according to any one of the preceding claims, **characterized in that** the conductor is connectable to an inner side of a tank in an electrically insulating manner with, for instance, adhesive tape.

11. A measuring system according to any one of the preceding claims, **characterized in that** the part of the conductor whose average temperature is determined, the sensor part, comprises a relatively large part of the conductor.

12. A measuring system according to any one of the preceding claims, **characterized in that** the supply source, in use, supplies a relative low power.

13. A measuring system according to any one of the preceding claims, **characterized in that** the supply source is designed to apply a voltage across the conductor in the order of 0.05-0.35 V or 0.1-0.3 V or 0.15-0.25V.

14. A measuring system according to any one of the preceding claims, **characterized in that**, for the purpose of applying the voltage, the supply source comprises a transformer coil with one or a few windings.

15. A measuring system according to any one of the preceding claims, **characterized in that**, for the purpose of applying the voltage, the supply source comprises an AC/DC converter.

16. A measuring system according to any one of the preceding claims, **characterized in that** the measuring device is designed to determine, in use, a quantity which corresponds to a current running through the conductor.

17. A measuring system according to any one of the preceding claims, **characterized in that** the measuring device is designed for determining, in use, the voltage (or a quantity corresponding thereto) across that part of the conductor (the sensor part) whose average temperature is to be determined.

18. A measuring system according to claim 17, **characterized in that** the measuring device is directly electrically connected to those points of the conductor between which that part of the conductor is located whose average temperature is to be determined (the sensor part).

19. A measuring system according to claim 18, **characterized in that** the measuring device is connected, by means of voltage measuring wires, to those points of the conductor between which that part of the conductor is located whose average temperature is to be determined (the sensor part).

20. A measuring system according to any one of the preceding claims, **characterized in that** the measuring device comprises a microprocessor.

21. A measuring system according to claim 20, **characterized in that** the microprocessor is designed for determining the resistance of at least that part of the conductor, the sensor part, whose average temperature is to be determined.

22. A measuring system according to claims 17, 18 and 20, **characterized in that** the microprocessor determines the resistance on the basis of the quantity corresponding to the current and the quantity corresponding to the voltage across that part of the conductor (the sensor part) whose average temperature is to be determined.

23. A measuring system according to claim 22, **characterized in that** the microprocessor is designed for determining the average temperature of the sensor part on the basis of the resistance.

24. A measuring system according to claim 20, **characterized in that** the microprocessor is designed to determine the average temperature of the sensor part on the basis of the resistance.

25. A measuring system according to claims 17, 18 and 20, **characterized in that** the microprocessor determines the average temperature of the sensor part on the basis of the quantity and the voltage across that part of the conductor (the sensor part) whose temperature is to be determined.

26. A measuring system according to any one of the preceding claims, **characterized in that** the measuring system is further provided with a temperature sensor for determining a, for instance local, temperature in the fluid, for instance for determining a relation between the average temperature and the resistance of the sensor part.

27. A measuring system according to claims 20 and 26, **characterized in that** the temperature sensor is connected to the microprocessor.

28. A measuring system according to any one of the preceding claims, **characterized in that** the sensor part comprises the entire conductor.

29. A measuring system according to any one of the preceding claims 1-26, **characterized in that** the sensor part, in ascending order of preference, determines more than 40%, 50%, 60%, 70%, 80% or 90% of the resistance of the conductor at room temperature.

30. A tank provided with a measuring system according to any one of the preceding claims.

31. A boiler provided with a tank according to claim 30.

32. An electronic system with which the average temperature of a boiler tank can be measured, **characterized in that** use is made of inexpensive, low-ohmic cord or cable, and wherein the supply is drawn from a low voltage in the order of 100 to several hundreds of millivolts, so that the required power is minimal.

33. An electronic system according to claim 32, **characterized in that** said low voltage can be drawn from an extra transformer coil having only one to a few windings.

34. An electronic system according to claim 32, **characterized in that** said low voltage can be drawn from a DC/DC-converter or different method for generating a low supply voltage.
